# DEMANDE DE BREVET EUROPEEN

(11) **EP 2 325 772 A2**
(43) Date de publication de la demande: **25.05.2011**
(21) Numéro de dépôt: 10188600.0
(22) Date de dépôt: 22.10.2010
(51) Int. Cl.: G06F 21/00, G08B 13/14

(54) **Procédé de contrôle d'un équipement de chiffrement susceptible d'être déplacé sans autorisation et dispositif associé**

(30) Priorité: 23.10.2009 FR 0905118
(71) Demandeur: Thales, 92200 Neuilly Sur Seine (FR)
(72) Inventeur: Saliba, Eric, 92704, Colombes (FR); Teyssier Olivier, 92704, Colombes (FR)
(74) Mandataire: Dudouit, Isabelle

(57) **Abrégé**

La présente invention concerne un procédé de contrôle d'un chiffreur susceptible de subir un incident de sécurité, par exemple un déplacement non autorisé, et son dispositif associé, ledit chiffreur comprenant des moyens de détection d'un tel incident, par exemple des moyens de détection de déplacement. Le procédé comprend au moins les étapes suivantes :
• lors d'une phase d'initialisation (201), ledit chiffreur produit une donnée initiale de contrôle et la transmet dans un flux chiffré à un poste de contrôle (101'), lequel poste mémorise ladite donnée initiale ;
• lors d'une phase de surveillance (203), lorsqu'un incident est constaté par lesdits moyens de détection, remplacer dans le chiffreur, ladite donnée initiale par une nouvelle donnée de contrôle ;
• lors d'une phase de contrôle (202a, 202b), le chiffreur transmet au dit poste la dernière donnée de contrôle produite, ledit poste vérifiant que ladite donnée de contrôle transmise est identique à la donnée de contrôle initiale.

L'invention s'applique notamment à la sécurisation de réseaux informatiques sensibles d'entreprises, d'établissements publics ou d'administrations.

## Description

La présente invention concerne un procédé de contrôle d'un chiffreur susceptible de subir un incident de sécurité, par exemple un déplacement non autorisé, et son dispositif associé. Elle s'applique notamment à la sécurisation de réseaux informatiques d'entreprises, d'établissements publics ou d'administrations.

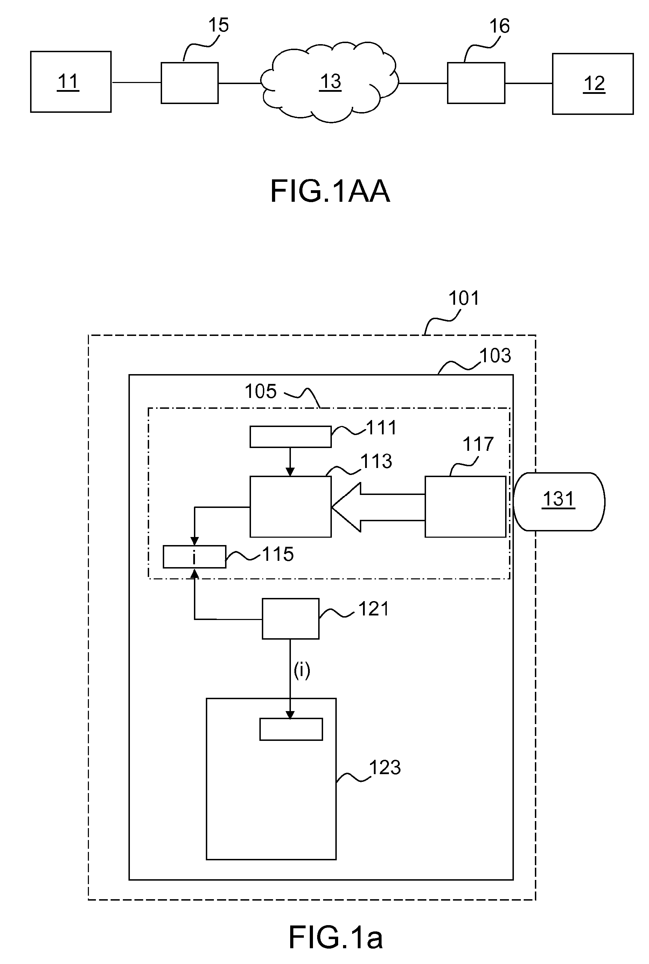

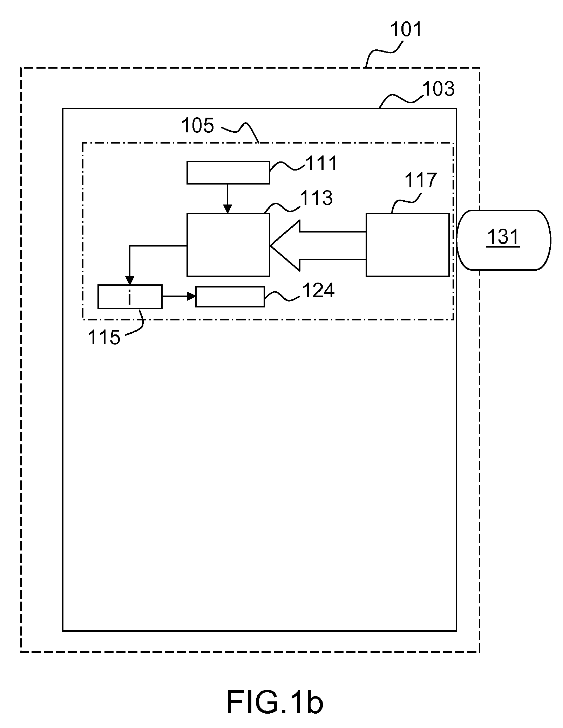

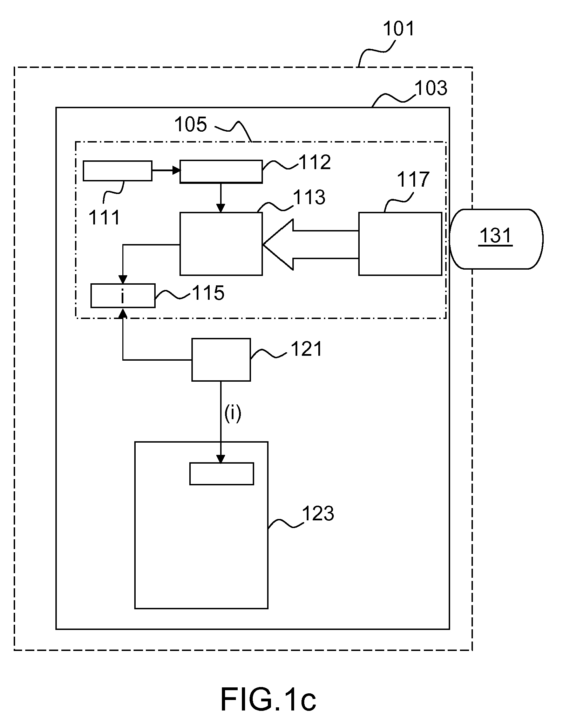

Un service de chiffrement peut, par exemple, être offert sous la forme d'un boîtier physique comportant au moins une entrée et au moins une sortie de données raccordées à des équipements informatiques. Le boîtier, désigné par le terme de chiffreur par la suite, comprend un module électronique de chiffrement utilisant une ou plusieurs clés cryptographiques aux fins de transformer des données claires en données chiffrées et des données chiffrées en données claires. Un canal de communication protégé 14 peut ainsi être établi, par exemple, entre un premier équipement 11 et un second équipement 12 connectés à un réseau 13, un chiffreur 15, 16 étant placé en coupure entre le réseau 13 et chacun des équipements 11, 12, comme illustré dans la figure 1 AA.

Pour attaquer un système pourvu d'un chiffreur, une première méthode consiste simplement à contourner le chiffreur en connectant directement au réseau l'équipement initialement raccordé au chiffreur. Une deuxième méthode vise à piéger le chiffreur en le modifiant subrepticement, ce qui implique généralement une intrusion physique dans le chiffreur. Ces deux méthodes d'attaques nécessitent presque toujours un déplacement du chiffreur, lequel déplacement est rendu d'autant plus facile que les chiffreurs réalisés aujourd'hui sont de taille réduite.

Aussi, à défaut de pouvoir surveiller en permanence le chiffreur, il est parfois prévu de le placer dans un boîtier de protection et/ou de le sceller à un support inamovible. Toutefois, ces mesures sont faillibles, lourdes à mettre en oeuvre, et elles constituent autant d'obstacles à une bonne maintenance du système.

Il est également connu de contrecarrer les attaques précitées en pourvoyant les chiffreurs de moyens de détection de déplacement provoquant un effacement automatique des clés cryptographiques et/ou des autres paramètres sensibles du chiffreur. Toutefois, cette solution implique une reconfiguration complète du chiffreur après l'effacement, même lorsque cet effacement est dû à une fausse alerte ; elle peut donc nuire à la disponibilité du système dans laquelle elle est mise en oeuvre et elle oblige également à un réglage fin des moyens de détection.

Un but de l'invention est de trouver des moyens pour éviter que, dans un système comprenant des chiffreurs, les attaques physiques d'un chiffreur n'entraînent des failles de sécurité dans le système, et ce, en altérant le moins possible la disponibilité du système. A cet effet, l'invention a pour objet un procédé de contrôle d'un chiffreur susceptible de subir un incident de sécurité, par exemple un déplacement non autorisé, ledit chiffreur comprenant des moyens de détection d'un tel incident, par exemple des moyens de détection de déplacement, ledit procédé étant caractérisé en ce qu'il comprend au moins les étapes suivantes :
- lors d'une phase d'initialisation, ledit chiffreur produit une donnée initiale de contrôle et la transmet dans un flux chiffré à un poste de contrôle, lequel poste mémorise ladite donnée initiale ;
- lors d'une phase de surveillance, lorsqu'un incident, par exemple un déplacement non autorisé, est constaté par lesdits moyens de détection, remplacer dans le chiffreur, la donnée initiale de contrôle par une nouvelle donnée de contrôle ;
- lors d'une phase de contrôle, le chiffreur transmet au dit poste la dernière donnée de contrôle produite, ledit poste vérifiant que ladite donnée de contrôle transmise est identique à la donnée de contrôle initiale.

Le procédé selon l'invention peut être avantageusement appliqué au contrôle d'un déplacement non autorisé d'un chiffreur. Il permet de s'assurer que le chiffreur n'a pas été déplacé au-delà d'une limite admissible, un déplacement anormal étant révélé par l'existence d'une différence entre la valeur de contrôle mémorisée par le poste de contrôle et la dernière valeur de contrôle transmise par le chiffreur. Contrairement à un procédé classique qui exerce un contrôle purement local à travers des capteurs de mouvement déclenchant des actions de protection, le procédé selon l'invention découple la détection d'un déplacement avec l'éventuelle action de sécurisation subséquente en s'appuyant sur au moins un poste distant du chiffreur. Un contournement frauduleux de cette protection est ainsi rendu plus difficile puisqu'un attaquant devrait intervenir concomitamment sur le chiffreur et sur le poste de contrôle. Le procédé selon l'invention comprend une phase d'initialisation ponctuelle, une phase de surveillance permanente (lorsque les moyens de détection de déplacement sont actifs), la phase de contrôle étant ponctuelle mais, de préférence, répétée dans le temps.

Le procédé selon l'invention peut également être appliqué au contrôle d'un chiffreur subissant d'autres événements de sécurité qu'un déplacement non autorisé. A titre d'exemple, l'ouverture de son capot, une augmentation anormale de sa température peuvent également faire l'objet d'un contrôle par le procédé selon l'invention. Dans ce cas, les moyens de détection appropriés et connus de l'homme de l'art doivent être employés pour la détection de tels incidents, par exemple un dispositif de contact déclenché lors de l'ouverture du capot du chiffreur ou un capteur de température. En outre, plusieurs moyens de détection peuvent être associés de manière à ce que plusieurs types d'événements de sécurité soient détectés ; dans ce cas, il suffit que l'un des moyens de détection détecte un événement (c'est-à-dire une anomalie, un dysfonctionnement), alors la donnée de contrôle dans le chiffreur est remplacée par une nouvelle donnée de contrôle.

Selon une mise en oeuvre du procédé selon l'invention, la donnée de contrôle initiale et la ou les données de contrôle produites ultérieurement pour remplacer cette donnée initiale sont générées de manière aléatoire. L'imprédictibilité de la valeur de contrôle permet d'éviter tout risque de détermination de la valeur de contrôle initiale par analyse des valeurs de contrôle ultérieurement produites.

Selon une mise en oeuvre du procédé selon l'invention, le poste de contrôle émet cycliquement une requête vers le chiffreur à sécuriser pour demander la transmission de la dernière donnée de contrôle mémorisée par le chiffreur à sécuriser. Il est à noter que la donnée de contrôle peut être considérée comme une donnée de confirmation que le chiffreur n'a pas subi d'incident, par exemple qu'il n'a pas été déplacé. Ainsi, une politique de sécurité peut être définie pour vérifier régulièrement l'absence d'incident, par exemple le non déplacement du chiffreur.

Selon une mise en oeuvre du procédé selon l'invention, une alerte de sécurité est émise vers le poste de contrôle lorsqu'un incident, par exemple un déplacement, est constaté par lesdits moyens de détection de déplacement. Sans se substituer aux contrôles précités de non déplacement du chiffreur, cette alerte de sécurité peut améliorer la réactivité à une éventuelle anomalie.

L'invention a également pour objet un procédé de sécurisation d'un chiffreur, ledit procédé comprenant les étapes du procédé de contrôle tel que décrit plus haut, ledit procédé de sécurisation exécutant une étape de protection des données susceptibles de transiter via ce chiffreur si le poste de contrôle constate une différence entre la donnée de contrôle initiale et la dernière donnée de contrôle transmise au poste de contrôle. Par exemple, le poste de contrôle alerte les équipements susceptibles de communiquer avec ledit chiffreur, de manière à interdire toute émission de données vers ce chiffreur.

Le poste de contrôle peut être un chiffreur homologue distant du chiffreur à sécuriser, toute transmission de données du chiffreur homologue vers le chiffreur à sécuriser étant bloquée si le chiffreur homologue constate que la donnée de contrôle que lui transmet le chiffreur à sécuriser est différente de la donnée de contrôle initiale.

Selon une mise en oeuvre du procédé de sécurisation d'un chiffreur selon l'invention, si le chiffreur homologue constate que la donnée de contrôle que lui transmet le chiffreur à sécuriser est différente de la donnée de contrôle initiale, alors toute transmission de données du chiffreur à sécuriser vers le chiffreur homologue est bloquée.

Selon une mise en oeuvre du procédé de sécurisation d'un chiffreur selon l'invention, avant que des données utiles ne soient transmises entre le chiffreur à sécuriser et le chiffreur homologue, le chiffreur homologue émet une requête vers le chiffreur à sécuriser pour demander la transmission de la dernière donnée de contrôle mémorisée par le chiffreur à sécuriser. Par données utiles, on entend des données contenant des informations utilisateur, à transmettre de façon sûre entre les deux chiffreurs, par opposition aux données de contrôle ou de gestion du réseau qui ne contiennent pas d'information secrète. Selon cette mise en oeuvre, aucune donnée utile ne peut être transmise vers le chiffreur à sécuriser sans qu'un contrôle ne soit effectué préalablement.

L'invention a également pour objet un chiffreur sécurisé apte à établir un canal de communication sûr avec un chiffreur homologue, ledit chiffreur sécurisé comprenant des moyens de détection d'un incident, par exemple un déplacement, ledit chiffreur étant apte à modifier une valeur de contrôle choisie par le chiffreur dès qu'un incident, par exemple un déplacement dudit chiffreur, est constaté par lesdits moyens de détection.

Le chiffreur selon l'invention peut comprendre des premiers moyens de mémorisation d'un indice i, des deuxièmes moyens de mémorisation d'un ensemble de valeurs aléatoires, et des moyens de lecture aptes à utiliser l'indice i stocké dans les premiers moyens de mémorisation pour lire une valeur stockée dans lesdits deuxièmes moyens de mémorisation, les premiers moyens de mémorisation étant implantés au plus près des données sensibles du chiffreur, lesdits moyens de détection étant aptes à modifier l'indice i stocké dans les premiers moyens de mémorisation. Par « données sensibles du chiffreur », on entend les données que l'on cherche à protéger. Ce sont par exemple les clés cryptographiques utilisées par le chiffreur pour transformer des données claires en données chiffrées. Un avantage de ce mode de réalisation est qu'il peut, en outre, bénéficier aisément des dispositifs d'effacement d'urgence déjà connus. En effet, en cas de détection d'évènement de sécurité physique (température anormale, altération physique, activité anormale) détectée par un tel dispositif, l'effacement du seul indice i mémorisé dans les premiers moyens de mémorisation suffit à rendre le chiffreur inopérant ; nul besoin en l'espèce d'effacer un grand volume de données.

Selon un autre mode de réalisation du chiffreur selon l'invention le chiffreur comprend des premiers moyens de mémorisation d'un indice i, des moyens de génération d'une valeur aléatoire prenant l'indice i comme germe d'aléa, les moyens de mémorisation étant implantés au plus près des données sensibles du chiffreur, lesdits moyens de détection étant aptes à modifier l'indice i stocké dans les premiers moyens de mémorisation.

Le chiffreur peut comprendre des moyens de désactivation et d'activation des moyens de détection d'incident. Ces moyens de désactivation et d'activation permettent de suspendre et reprendre la phase de surveillance du chiffreur, et ainsi permettre à un opérateur autorisé de pouvoir intervenir sur le chiffreur sans lever d'alerte. Par exemple, les moyens d'entrée de données peuvent être une carte magnétique, un pavé numérique extérieur au boîtier du chiffreur permettant d'entrer un code de neutralisation, un support de masse externe à connecter au chiffreur, le support comprenant une clé d'accès administrateur.

L'invention concerne également un système informatique à sécuriser comprenant au moins deux chiffreurs distants reliés par réseau, au moins l'un desdits chiffreurs étant un chiffreur sécurisé tel que décrit plus haut.

Selon un mode de réalisation du système selon l'invention, le premier chiffreur mémorise une donnée de contrôle indiquant une absence d'incident sur le deuxième chiffreur, le deuxième chiffreur mémorisant une donnée de contrôle indiquant une absence d'incident sur le premier chiffreur. Par exemple, chacune de ces données de contrôle est une donnée de contrôle de non-déplacement du chiffreur, ou encore une donnée de contrôle combinant plusieurs vérifications : non-déplacement, absence d'ouverture anormale du capot, température normale...etc.

Selon un mode de réalisation du système selon l'invention, le système comprend un centre de télégestion mémorisant la donnée de contrôle initiale de chacun desdits chiffreurs, ledit centre de télégestion comprenant un module de contrôle apte à vérifier qu'une donnée de contrôle transmise par un des chiffreurs est égale à la donnée de contrôle initiale mémorisée par ledit centre pour ce chiffreur.

D'autres caractéristiques apparaîtront à la lecture de la description détaillée donnée à titre d'exemple et non limitative qui suit faite en regard de dessins annexés qui représentent :
- la figure 1AA, une illustration d'un contexte d'utilisation connu d'un chiffreur ;
- la figure 1a, un premier exemple d'architecture d'un dispositif selon l'invention équipant un chiffreur ;
- la figure 1b, un deuxième exemple d'architecture d'un dispositif selon l'invention équipant un chiffreur ;
- la figure 1c, un troisième exemple d'architecture d'un dispositif selon l'invention équipant un chiffreur ;
- la figure 2, un schéma illustrant les étapes d'une mise en oeuvre du procédé selon l'invention ;
- la figure 3, un schéma illustrant un système mettant en oeuvre le procédé selon l'invention.

Dans un souci de clarté, les mêmes références dans des figures différentes désignent les mêmes éléments. En outre, dans un souci de simplification de la description, les exemples sont donnés pour la détection d'un déplacement anormal du chiffreur. Néanmoins, ces exemples sont applicables à la détection d'autres incidents. Il suffit pour cela d'employer des moyens de détection appropriés à la place des capteurs de mouvement.

La figure 1a présente un premier exemple d'architecture d'un dispositif selon l'invention équipant un chiffreur. Le chiffreur 101 comprend un module de chiffrement 103 dans lequel se trouve une zone physiquement protégée 105. Cette zone protégée 105 comprend un ou plusieurs composants sensibles du point de vue de la sécurité (composants non représentés sur la figure), par exemple, une mémoire contenant une clé cryptographique. La zone protégée 105 du chiffreur 101 est pourvue de moyens de détection de déplacement 111, 113 comprenant des capteurs de mouvement 111 reliés à un module de détection 113. Dans l'exemple, la zone protégée 105 comporte également une mémoire 115 apte à enregistrer une valeur d'indice. Le chiffreur 101 de la figure 1a comprend aussi un module de lecture 121 dans une table d'aléas 123.

Les capteurs de mouvement 111 comprennent par exemple des accéléromètres classiques. En sortie, ces capteurs 111 transmettent des valeurs d'accélérations subies par le chiffreur au module de détection 113. Le module de détection 113 est configuré avec un seuil au-delà duquel le chiffreur 101 est considéré comme déplacé. Si une valeur dépassant ce seuil est transmise au module de détection 113, l'indice i est modifié. Plus ce seuil est petit, plus la détection est sensible, autrement dit, un mouvement de moindre amplitude peut suffire à déclencher ledit module 113. Le seuil peut être augmenté, par exemple, lorsque le chiffreur 101 est susceptible d'être soumis à d'importantes vibrations, même dans un cadre normal de fonctionnement.

La mémoire 115, qui selon un autre mode de réalisation pourrait par exemple être un registre, contient une valeur d'indice i qui n'est pas modifiée tant que le module de détection 113 n'a pas détecté de déplacement du chiffreur 101. Autrement dit, lors d'une phase d'initialisation, l'indice i est initialisé à une valeur i0 et cet indice i0 demeure identique tant que la zone protégée 105 ne subit aucun déplacement anormal.

L'indice initial i0 est choisi aléatoirement, par exemple en secouant le chiffreur 101 avant de l'immobiliser. Afin d'effectuer cette initialisation, des moyens de désactivation 117, 131 du module de détection 113 peuvent être employés. Ces moyens de désactivation 117, 131 permettent d'éviter la neutralisation du chiffreur lorsqu'une intervention autorisée doit être accomplie sur ce chiffreur. Par exemple, les moyens de désactivation 117, 131 peuvent comprendre un support amovible 131 conservé par un administrateur système, le support comprenant une clé d'invalidation du module de détection 113. Dans l'exemple non limitatif de la figure 1a, le support 131 est connecté à un module d'invalidation 117 du module de détection 113. Lorsque la clé présente dans le support 131 est reconnue par le module d'invalidation 117, le module de détection 113 de déplacement change d'état : il est désactivé s'il était actif ou activé s'il était inactif. Lorsque le module de détection 113 est désactivé, il ne modifie plus la valeur de l'indice i dans la mémoire 115, même lorsque le chiffreur est déplacé. Les moyens de désactivation 117, 131 peuvent être utilisés en cas d'opération de maintenance du chiffreur ou, plus généralement, lors d'une intervention sur le système informatique dans lequel le chiffreur est installé.

La présence des moyens de désactivation 117, 131 ne doit pas se traduire par l'ajout d'une vulnérabilité supplémentaire. Aussi, il convient de veiller à ce qu'une tentative d'altération desdits moyens soit évitée. Dans l'exemple, le module d'invalidation 117 est avantageusement implanté de sorte à être proche des moyens de détection de déplacement 111, 113. De même, il convient de tenir le support 131 en lieu sûr et non localisé avec le chiffreur 101 comprenant les moyens de désactivation 117 correspondants..

La table d'aléas 123 contient un ensemble de N valeurs aléatoires et le module de lecture 121 permet de lire la donnée dont l'emplacement, dans la table d'aléas 123, est fonction de l'indice i. Par exemple, l'emplacement de la donnée est donné directement par l'indice i, cet indice étant alors compris entre 1 et N. Une donnée aléatoire de contrôle est choisie en pointant la valeur qui est à l'indice i (la ième valeur) dans la table 123, via le module de lecture 121. Initialement au moins, à la mise en place du chiffreur, la donnée aléatoire de contrôle choisie est donc celle pointée par l'indice initial i0.

Avantageusement, les capteurs de mouvement 111, le module de détection 113 et la mémoire 115 sont implantés de sorte à être proches des éléments sensibles (mémoires stockant des clés cryptographiques, par exemple) du point de vue de la sécurité du chiffreur 101. Pour une protection efficace du chiffreur 101, toute tentative d'intervention visant à compromettre la valeur d'indice initial i0 ou à accéder aux clés cryptographiques doit conduire à un déclenchement du module de détection 113 et une modification de la valeur d'indice i0 enregistrée dans la mémoire 115.

Le nombre N de valeurs dans la table d'aléas 123 peut être ajusté en fonction du niveau de sécurité requis. L'augmentation du nombre N de valeurs diminue, du point de vue de la sécurité du chiffreur, la criticité d'une éventuelle compromission de la table d'aléas 123. En effet, un attaquant disposant des N valeurs de cette table 123 n'aurait qu'une chance sur N de choisir la valeur correspondant à la valeur de contrôle initiale pointée par l'indice i0.

Selon un autre mode de réalisation illustré en figure 1b, le chiffreur 101, au lieu de comporter une table d'aléas 123, comprend des moyens de génération d'aléas 124 initialisés, par exemple, avec l'indice i. Ainsi, lors de la phase d'initialisation, une valeur de contrôle initiale est produite par les moyens de génération d'aléas 124 utilisant l'indice initial i0 comme germe d'aléa. Par la suite, une nouvelle valeur aléatoire est générée dès qu'un déplacement anormal est détecté.

Si les valeurs transmises par les capteurs de mouvements 111 au module de détection 113 sont toujours inférieures au seuil, alors aucune anomalie n'est relevée. A contrario, si une valeur dépasse ce seuil, alors l'indice i0 est écrasé par un nouvel indice i. Ce nouvel indice i est, dans l'exemple, calculé en fonction des valeurs d'accélération transmises par les capteurs de mouvements 111 ou l'indice i peut être incrémenté d'un nombre prédéterminé à chaque fois qu'un déplacement est détecté, ou encore, l'indice i peut être affecté à une valeur prédéterminée particulière une fois qu'au moins un mouvement a été détecté. En tout état de cause, la manière dont l'indice est modifié doit tenir compte du fait que la connaissance de la valeur du nouvel indice ne doit pas permettre de retrouver la valeur de l'indice initial i0.

Avantageusement, les moyens de détection 111, 113 de déplacement sont alimentés par une alimentation sauvegardée du module de sécurité 103, par exemple par une pile. La consommation de ce module de sécurité 103 est faible du fait de l'état statique en fonctionnement nominal. En outre, l'indice i est, par exemple, sauvegardé sur une mémoire 115 volatile, de sorte qu'une coupure de l'alimentation entraîne un effacement de la valeur d'indice initial i0.

En outre, les capteurs de mouvements 111 peuvent être choisis de manière à distinguer les accélérations subies sur chacun des trois axes spatiaux. Ainsi, il est possible de privilégier la détection de certains mouvements particuliers, par exemple détecter un retournement du chiffreur du haut vers le bas.

Par ailleurs, comme illustré en figure 1c, les capteurs de mouvements 111 peuvent être associés à un module d'intégration 112 permettant de déterminer, à partir des valeurs d'accélérations fournies par les capteurs de mouvements 111, la distance de déplacement subie par le chiffreur 101. Le module de détection 113 est alors alimenté par le module d'intégration 112 et le seuil du module de détection 113 est choisi en fonction d'une distance maximale, considérée comme acceptable, d'éloignement du chiffreur 101 de sa position initiale. Les moyens de détection de déplacement regroupant les capteurs de mouvements 111, le module d'intégration 112 et le module de détection 113 peuvent par exemple être configurés de sorte à considérer que le chiffreur n'a pas été déplacé lorsque le chiffreur demeure au sein d'un périmètre préétabli, une détection de déplacement étant effectuée lorsque le chiffreur sort de ce périmètre.

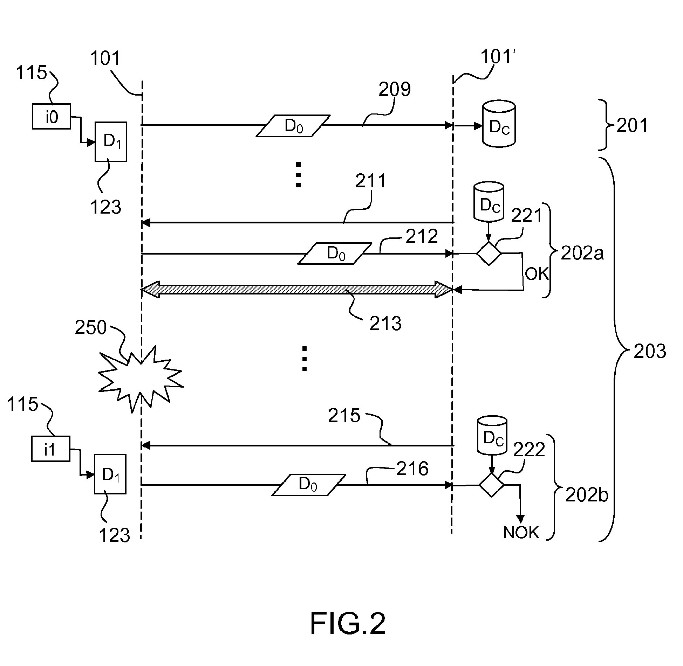

La figure 2 illustre les étapes d'une mise en oeuvre du procédé selon l'invention entre deux chiffreurs 101, 101'. Le premier chiffreur 101 est contrôlé par le second chiffreur 101' qui est distant du premier chiffreur 101, par exemple dans une autre pièce, voire sur un autre site. Le premier chiffreur 101 comprend des moyens de détection de déplacement, comme par exemple, ceux présentés en figure 1a, et est apte à émettre une donnée de contrôle de non-déplacement vers le second chiffreur 101'.

Lors d'une phase d'initialisation 201, une valeur de contrôle initiale D₀ signée et émise 209 vers le deuxième chiffreur 101' qui vérifie sa signature et mémorise la valeur D₀ authentique. La clé privée de signature peut être connue du composant chiffre du module de sécurité ou stockée dans le support 131. La clé publique est par ailleurs connue du deuxième chiffreur 101'. La valeur de contrôle peut être émise sur requête du deuxième chiffreur 101' ; elle peut être transmise cycliquement à ce deuxième chiffreur 101' ; elle peut encore être émise sur activation d'un événement détecté par le premier chiffreur 101. Avantageusement, une vérification de la valeur de contrôle est effectuée avant toute transmission de données via le premier chiffreur 101.

Il faut noter que toutes les données émises entre le premier chiffreur 101 et le deuxième chiffreur 101' transitent via un flux chiffré, y compris donc les valeurs de contrôle de non-déplacement. Dans l'exemple, la donnée de contrôle initiale D₀ est, conformément aux illustrations des figures 1 et 2, la donnée de la table d'aléas 123 pointée par l'indice initial i0 mémorisé par le premier chiffreur 101.

Lors d'une première phase de contrôle 202a, une requête 211 est émise par le deuxième chiffreur 101' vers le premier chiffreur 101 pour demander au premier chiffreur 101 de lui transmettre la valeur de contrôle. La valeur de contrôle D₀, demeurée inchangée, est donc transmise 212 au deuxième chiffreur 101'. Le deuxième chiffreur 101' compare la valeur de contrôle transmise avec la valeur qu'il a mémorisée lors de la phase d'initialisation. En l'espèce, la comparaison 221 montre que les valeurs sont identiques, ce qui indique que le chiffreur n'a pas été déplacé. Par conséquent, des échanges de données 213 peuvent continuer ou débuter entre les deux chiffreurs 101, 101'.

Plus tard, le premier chiffreur 101 est déplacé 250, ce qui provoque une modification de la donnée de contrôle pointée par ce premier chiffreur 101.

Lors d'une deuxième phase de contrôle 202b, une requête 215 est de nouveau émise par le deuxième chiffreur 101' vers le premier chiffreur 101 pour demander au premier chiffreur 101 de lui transmettre la valeur de contrôle. Cependant, cette fois-ci, la valeur de contrôle D₁ retournée par le premier chiffreur 101 est différente de la valeur D₀ mémorisée par le deuxième chiffreur 101'. Ainsi, la comparaison 222 effectuée par le deuxième chiffreur 101' fait apparaître une anomalie de déplacement. Le deuxième chiffreur 101' applique alors une nouvelle politique de sécurité vis à vis du premier chiffreur 101 et peut remonter une alarme de sécurité vers d'autres équipements auxquels il est connecté. Par exemple, il interdit tout transfert de données vers ce premier chiffreur 101.

Le procédé de la figure 2 s'articule donc autour d'une phase d'initialisation 201 préalable, d'une phase de surveillance 203 permanente des déplacements du premier chiffreur 101 (sauf désactivation volontaire des moyens de détection de déplacement), et de phases de contrôle 202a, 202b qui peuvent être déclenchées cycliquement par le deuxième chiffreur 101' ou à des moments opportuns, par exemple, préalablement à la transmission de données utiles du deuxième chiffreur 101' vers le premier chiffreur 101.

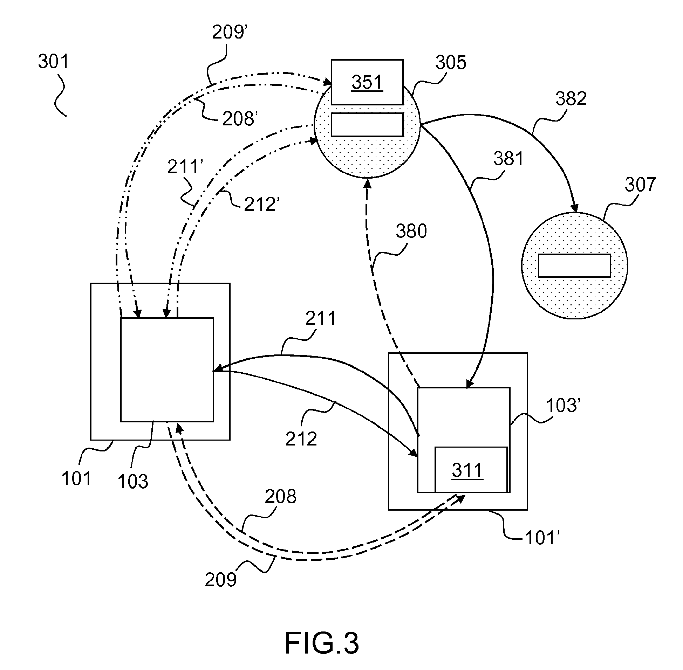

La figure 3 illustre les étapes d'un système mettant en oeuvre le procédé selon l'invention. Le système informatique 301 comprend deux chiffreurs 101, 101', un centre de télégestion 305 et d'autres équipements 307, raccordés à un réseau. Le centre de télégestion 305 identifie les chiffreurs déplacés via le procédé selon l'invention ou est alerté d'un déplacement d'un premier chiffreur par un deuxième chiffreur homologue au premier. Le centre de télégestion 305 permet de centraliser les alertes de sécurité et de les diffuser aux autres équipements afin de modifier les politique de sécurité à appliquer en fonction du chiffreur qui a été détecté comme déplacé. Le centre de télégestion 305 peut, par exemple, être un serveur ou un poste administrateur.

Chaque chiffreur 101, 101' comprend un module de chiffrement 103, 103' selon l'invention. Dans l'exemple, le premier chiffreur 101 est contrôlé par le deuxième chiffreur 101', lequel mémorise la donnée de contrôle initiale du premier chiffreur 101 et applique des phases de contrôle 202a, 202b, comme illustré en figure 2. Le premier chiffreur 101 est également surveillé par le centre de télégestion 305 qui mémorise également la donnée de contrôle initiale du premier chiffreur 101 et qui comprend un module 351 de contrôle apte à lever une alerte en cas de différence entre la donnée de contrôle transmise 212' par le premier chiffreur et la donnée de contrôle initiale.

Si une alerte 380 indiquant un déplacement du premier chiffreur 101 est levée par le deuxième chiffreur 101', cette alerte 380 est transmise au centre de télégestion 305 qui diffuse des alarmes 381, 382 à tous les chiffreurs 101' et équipements 307 concernés par cette anomalie de déplacement du premier chiffreur 101.

Selon un autre mode de mise en oeuvre du procédé selon l'invention, les phases de contrôle de tous les chiffreurs du système sont toutes centralisées dans un centre de télégestion et aucun contrôle n'est effectué entre les chiffreurs eux-mêmes. Dans ce cas, lors d'une phase d'initialisation, une donnée de contrôle est, pour chaque chiffreur, choisie et transmise vers le poste de télégestion, puis le poste de télégestion applique des phases de contrôle sur chacun des chiffreurs. Dès qu'un déplacement est détecté sur un chiffreur, la politique de sécurité à appliquer pour chacun des autres chiffreurs peut être adaptée par le centre de télégestion.

Le procédé selon l'invention peut donc être mis en oeuvre de manière centralisée, distribuée ou selon un mélange de contrôle centralisé et distribué.

Le procédé selon l'invention peut être mis en oeuvre dans toute application nécessitant l'établissement d'un canal de communication sûr. A titre d'exemple, il peut être mis en oeuvre pour sécuriser les réseaux informatiques de services bancaires.

Un avantage du procédé selon l'invention est qu'il permet de d'ajuster le seuil de détection plus intelligemment, en prenant en compte le contexte d'utilisation de ce chiffreur.

## Revendications

1. Procédé de contrôle d'un chiffreur (101) susceptible de subir un incident de sécurité, par exemple un déplacement non autorisé, ledit chiffreur comprenant des moyens de détection d'un tel incident, par exemple des moyens de détection de déplacement (111, 113), ledit procédé étant **caractérisé en ce qu'**il comprend au moins les étapes suivantes :
● lors d'une phase d'initialisation (201), ledit chiffreur produit une donnée initiale de contrôle et la transmet (209, 209') dans un flux chiffré à un poste de contrôle (101', 305), lequel poste mémorise ladite donnée initiale ;
● lors d'une phase de surveillance (203), lorsqu'un incident est constaté par lesdits moyens de détection, remplacer dans le chiffreur, la donnée initiale de contrôle par une nouvelle donnée de contrôle ;
● lors d'une phase de contrôle (202a, 202b), le chiffreur transmet (212, 212') au dit poste (101', 305) la dernière donnée de contrôle produite, ledit poste vérifiant que ladite donnée de contrôle transmise est identique à la donnée de contrôle initiale.

2. Procédé de contrôle d'un chiffreur selon la revendication 1, **caractérisé en ce que** la donnée de contrôle initiale et la ou les données de contrôle produites ultérieurement pour remplacer cette donnée initiale sont générées de manière aléatoire.

3. Procédé de contrôle d'un chiffreur selon la revendication 1 ou 2, **caractérisé en ce que** le poste de contrôle (101', 305) émet cycliquement une requête (211, 215, 211') vers le chiffreur (101) à sécuriser pour demander la transmission (212, 216, 212') de la dernière donnée de contrôle mémorisée par le chiffreur à sécuriser.

4. Procédé de contrôle d'un chiffreur selon la revendication 1 à 3, **caractérisé en ce qu'**une alerte de sécurité (380) est émise vers le poste de contrôle (101', 305) lorsqu'un incident est constaté par lesdits moyens de détection (111, 113).

5. Procédé de sécurisation d'un chiffreur (101), ledit procédé comprenant les étapes du procédé de contrôle selon l'une des revendications 1 à 4, ledit procédé de sécurisation exécutant une étape de protection des données susceptibles de transiter via ce chiffreur (101) si le poste de contrôle (101', 305) constate une différence entre la donnée de contrôle initiale et la dernière donnée de contrôle transmise au poste de contrôle.

6. Procédé de sécurisation d'un chiffreur selon la revendication 5, le poste de contrôle étant un chiffreur homologue (101') distant du chiffreur à sécuriser (101), le procédé étant **caractérisé en ce que** si le chiffreur homologue (101') constate que la donnée de contrôle que lui transmet le chiffreur à sécuriser (101) est différente de la donnée de contrôle initiale, alors toute transmission de données du chiffreur homologue (101') vers le chiffreur à sécuriser (101) est bloquée.

7. Procédé de sécurisation d'un chiffreur selon la revendication 6, le procédé étant **caractérisé en ce que** si le chiffreur homologue (101') constate que la donnée de contrôle que lui transmet le chiffreur à sécuriser (101) est différente de la donnée de contrôle initiale, alors toute transmission de données du chiffreur à sécuriser (101) vers le chiffreur homologue (101') est bloquée.

8. Procédé de sécurisation d'un chiffreur selon la revendication 6 ou 7, **caractérisé en ce que**, avant que des données utiles ne soient transmises entre le chiffreur à sécuriser (101) et le chiffreur homologue, le chiffreur homologue (101') émet une requête (211, 215) vers le chiffreur à sécuriser (101) pour demander la transmission (212, 216) de la dernière donnée de contrôle mémorisée par le chiffreur à sécuriser.

9. Chiffreur sécurisé (101) apte à établir un canal de communication sûr avec un chiffreur homologue (101'), ledit chiffreur sécurisé (101) comprenant des moyens de détection d'un incident (111, 113), ledit chiffreur étant **caractérisé en ce qu'**il est apte à modifier une valeur de contrôle choisie par le chiffreur dès qu'un incident est constaté par lesdits moyens de détection.

10. Chiffreur sécurisé (101) selon la revendication 9, **caractérisé en ce qu'**il comprend des premiers moyens de mémorisation (115) d'un indice i, des deuxièmes moyens de mémorisation (123) d'un ensemble de valeurs aléatoires, et des moyens de lecture (121) aptes à utiliser l'indice i stocké dans les premiers moyens de mémorisation (115) pour lire une valeur stockée dans lesdits deuxièmes moyens de mémorisation (123), les premiers moyens de mémorisation (115) étant implantés au plus près des données sensibles du chiffreur, lesdits moyens de détection (111, 113) étant aptes à modifier l'indice i stocké dans les premiers moyens de mémorisation (115).

11. Chiffreur (101) selon la revendication 9, **caractérisé en ce qu'**il comprend des moyens de mémorisation (115) d'un indice i, des moyens de génération (124) d'une valeur aléatoire prenant l'indice i comme germe d'aléa, les moyens de mémorisation (115) étant implantés au plus près des données sensibles du chiffreur, lesdits moyens de détection (111, 113) étant aptes à modifier l'indice i stocké dans les premiers moyens de mémorisation (115).

12. Chiffreur selon l'une des revendications 9 à 11, **caractérisé en ce qu'**il comprend des moyens (117, 131) de désactivation et d'activation des moyens de détection d'incident (111, 113).

13. Système informatique à sécuriser comprenant au moins deux chiffreurs distants (101, 101') reliés par réseau, le système étant **caractérisé en ce qu'**au moins l'un desdits chiffreurs (101, 101') est un chiffreur sécurisé selon l'une des revendications 9 à 11.

14. Système informatique selon la revendication 13, **caractérisé en ce que** le premier chiffreur (101) mémorise une donnée de contrôle indiquant une absence d'incident sur le deuxième chiffreur (101'), le deuxième chiffreur (101') mémorisant une donnée de contrôle indiquant une absence d'incident sur le premier chiffreur (101).

15. Système informatique selon la revendication 13, **caractérisé en ce qu'**il comprend un centre de télégestion (305) mémorisant la donnée de contrôle initiale de chacun desdits chiffreurs (101, 101'), ledit centre de télégestion (305) comprenant un module de contrôle (351) apte à vérifier qu'une donnée de contrôle transmise (212') par un des chiffreurs (101) est égale à la donnée de contrôle initiale mémorisée par ledit centre (305) pour ce chiffreur (101).
